(19) **Europäisches Patentamt**

**European Patent Office**

**Office européen des brevets**

(11) **EP 1 149 331 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(21) Anmeldenummer: 00983038.1

(22) Anmeldetag: **19.10.2000**

(51) Int Cl.⁷: $G05D\ 1/02$, G05B 13/02

(86) Internationale Anmeldenummer:
**PCT/DE2000/003673**

(87) Internationale Veröffentlichungsnummer:
**WO 2001/033305 (10.05.2001 Gazette 2001/19)**

(54) **VERFAHREN UND VORRICHTUNG ZUR REGELUNG EINER REGELSTRECKE**

METHOD AND DEVICE FOR REGULATING A REGULATING CIRCUIT

PROCEDE ET DISPOSITIF DE REGULATION D'UN SYSTEME REGLE

(84) Benannte Vertragsstaaten:
**DE ES FR GB IT**

(30) Priorität: **02.11.1999 DE 19952700**

(43) Veröffentlichungstag der Anmeldung:
**31.10.2001 Patentblatt 2001/44**

(73) Patentinhaber: **ROBERT BOSCH GMBH**
**70442 Stuttgart (DE)**

(72) Erfinder:
 • **DALAKURAS, Lambros**
 **75217 Birkenfeld (DE)**
 • **SCHMIDT, Frank**
 **71229 Leonberg (DE)**

(74) Vertreter:
 **Hörschler, Wolfram Johannes, Dipl.-Ing. et al**
 **Isenbruck, Bösl, Hörschler, Wichmann, Huhn**
 **Theodor-Heuss-Anlage 12**
 **68165 Mannheim (DE)**

(56) Entgegenhaltungen:
 **EP-A- 0 469 943        EP-A- 0 583 773**
 **CH-A- 685 362          US-A- 5 229 941**

## Beschreibung

Die Erfindung betrifft ein Verfahren zur Regelung einer Regelstrecke mit einem vorbestimmten Sollverlauf und eine Regelvorrichtung für Vorgänge mit einem vorbestimmten Sollverlauf.

Verfahren zur Regelung von motorischen Antrieben sind hinreichend bekannt. Insbesondere bei Kraftfahrzeugen finden solche Regelstrecken hinreichend Anwendung, wie beispielsweise bei elektrisch betätigten Fensterhebern, Sitzverstellungen, Schiebetüren und/oder der Geschwindigkeitsregelung von Wischanlagen. Bei einer besonderen Klasse dieser Regelungsverfahren ist der Sollverlauf oder eine Solltrajektorie der Regelstrecke vorgegeben. Der Sollverlauf soll unter Verwendung des Regelungsverfahrens bzw. der Regelvorrichtung wiederholt nachgefahren werden. Hierbei können zwischen den einzelnen Regelungsvorgängen längere Zeiträume liegen. Insbesondere bei Kraftfahrzeugen treten solche Regelungsvorgänge mit einem vorbestimmten Sollverlauf häufig auf. Beispielsweise bei elektrisch betätigbaren Fensterhebern, Sitzverstellungen oder Schiebetüren, ebenso wie bei der Geschwindigkeitsregelung einer Wischeranlage.

CH-A 685 362 bezieht sich auf ein Verfahren zur programmierten Steuerung eines selbstfahrenden Fahrzeuges. Die Steuerung des letzteren enthält mindestens ein gespeichertes Soll-Wegprogramm. Nach Ablauf eines bestimmten Soll-Wegprogrammabschnittes wird mit Hilfe mindestens eines optisch anvisierten visuellen Referenzmerkmales ein Vergleich zwischen dem momentanen Ist-Weg und dem zugeordneten momentanen Soll-Weg durchgeführt. Die Differenz in Bezug auf Lage und Richtung wird zur Korrektur des weiteren Wegprogramms im Sinne der Erzielung einer Zusammenführung des nachfolgenden Ist-Weges mit dem Soll-Weg verwendet, wobei dieser Vorgang bis zur Erreichung des Weg-Endpunktes mehrmals wiederholt wird.

Im Stand der Technik sind eine Vielzahl von Regelungen bekannt. Beispielsweise P-, PI-, PID-Regler (proportional, proportional + integral, proportional + integral + differential), Zustandsregler, Adaptierregler werden zum Nachführen entlang vorgegebener Sollverläufe eingesetzt. Besondere Schwierigkeiten stellt für einen Regelvorgang eine Veränderung in der Regelstrecke (Aktor) dar. Aufgrund von Veränderungen, wie beispielsweise Verschleiß oder Alterung oder sonstwie hervorgerufenen Parameterschwankungen, wird die Güte des Regelvorganges teil weise erheblich herabgesetzt. Komplexere Regelungsverfahren (Adaption), die solchen Veränderungen Rechnung tragen können, sind aufgrund der hohen Anforderung an die zur Verfügung stehenden Rechenleistungen sehr eingeschränkt. Gerade bei einfachen und einfachsten Regelungsvorgängen erfordern Adaptierverfahren oftmals einen überproportional hohen Kosten- und Materialaufwand.

Vor diesem Stand der Technik liegt der Erfindung das Problem zugrunde, ein Verfahren und eine Regelvorrichtung bereitzustellen, die eine einfache und zuverlässige Regelung von wiederkehrenden Vorgängen gestatten und dabei Veränderungen und wechselnde Einflüsse der Regelstrecke berücksichtigen können.

Erfindungsgemäß wird das Problem durch ein Verfahren zur Regelung einer Regelstrecke in einem Kraftfahrzeug mit einem vorbestimmten Sollverlauf und einer Steuertrajektorie gelöst, wobei eine Ausgangstrajektorie der Regelstrecke für die gesamte Regelungsdauer eines Regelvorgangs, in der die Steuertrajektorie auf die Regelstrecke geschaltet ist, erfaßt wird, ein Regelfehler der Regelstrecke für den Regelvorgang abhängig von dem Sollverlauf und der Augangs trajektorie bestimmt wird und anschließend für jeden Zeitpunkt eines späteren Regelvorgangs eine neue Steuertrajektorie abhängig von dem Regelfehler und der Steuertrajektorie berechnet wird. Diesem Verfahren liegt der Ansatz zugrunde, daß ein vorbestimmter Sollverlauf und eine erste vorbestimmte Steuertrajektorie vorliegen.

Das erfindungsgemäße Verfahren bestimmt durch Vergleich der tatsächlichen Ausgangstrajektorie der Regelstrecke mit dem Sollverlauf, eine neue Steuertrajektorie, welche die Ausgangstrajektorie dem Sollverlauf annähert. Bei diesem Verfahren können der Sollverlauf und die Steuertrajektorie sowohl sich mit der Zeit verändernde Werte, als auch konstante Werte aufweisen. Ferner können in der Steuertrajektorie auch transiente Vorgänge der Regelstrecke berücksichtigt werden.

Erfindungsgemäß wird für die gesamte Regelungsdauer, in welcher die Steuertrajektorie auf die Regelstrecke geschaltet ist, die Ausgangstrajektorie der Regelstrecke erfaßt. Die Ausgangstrajektorie und der Sollverlauf dienen zur Bestimmung des Regelfehlers. Der Regelfehler ist allgemein ein Maß für die Abweichung zwischen Ist- und Sollverlauf der Regelstrecke. Bei der Bestimmung des Regelfehlers können zeitliche Verschiebungen/Verzögerungen und andere zeitliche Phänomene der Regelstrecke berücksichtigt werden. Gemäß der vorliegenden Erfindung wird die neue Steuertrajektorie für jeden Zeitpunkt eines späteren Regelvorgangs einzeln bestimmt. Die Berechnung eines neuen Wertes der Steuertrajektorie für einen bestimmten Zeitpunkt erfolgt abhängig von dem Regelfehler und der Steuertrajektorie, wobei der Berechnung derjenige Regelfehler zugrunde liegt, der während des Anliegens der Steuertzajektorie mit Hilfe der erfaßten Istwerte bestimmt wurde. Vorteilhaft an diesem Verfahren ist, daß der große Aufwand eines adaptiven Verfahrens vermieden wird. Die neue Steuertrajektorie kann zu jedem Zeitpunkt auf einfache Art und Weise berechnet werden, dabei sind keine aufwendigen Analysen, wie beispielsweise Wavelet- oder Fourier-Transformationen erforderlich.

In einer den Rechenaufwand weiter reduzierenden Ausbildung des Verfahrens folgt der spätere Regelungsvorgang, für den die neue Steuertrajektorie berechnet wird, auf den Regelungsvorgang, in dem der Regelfehler bestimmt wurde. Mit anderen Worten, es wird die neue Steuertrajektorie stets für den nachfolgenden Regelungsvorgang berechnet. Hierdurch werden aufwendige Zuordnungen zwischen unterschiedlichen Regelungsvorgängen vermieden. Vorausgesetzt wird bei diesem Verfahrensschritt, daß für den nachfolgenden Regelungsvorgang wieder derselbe Sollwertverlauf vorgegeben ist.

Besonders deutlich wird der Rechenaufwand reduziert durch eine vorteilhafte Weiterbildung des Verfahrens, bei welcher der Wert der neuen Steuertrajektorie in einem Zeitpunkt des nachfolgenden Regelungsvorgangs aus den Werten des Regelungsfehlers und der Steuertrajektorie zu einem Zeitpunkt des vorangegangenen Regelungsvorgangs bestimmt wird, wobei in den Zeitpunkten der beiden Regelungsvorgänge jeweils die gleiche Zeitdauer seit einem Beginnzeitpunkt, in dem die Steuertrajektorie auf die Regelstrecke geschaltet worden ist, vergangen ist. Die neue Steuertrajektorie zu einem Zeitpunkt t ergibt sich demnach aus der ursprünglichen Steuertrajektorie und dem Regelfehler in einem Zeitpunkt t' aus dem vorangegangenen Regelungsintervall. Dieser Zusammenhang kann durch nachfolgende Formel wiedergegeben werden:

$$\text{Formel 1:} \quad u_{k+m}(t) = \varphi_u \left( u_k(t') \right) \oplus \varphi_c \left( e_k(t') \right),$$

$$\text{mit } t - T_{k+m} = t' - T_k$$

Hierbei bezeichnen $T_k$ und $T_{k+m}$ den Anfang des k-ten bzw. (k+m)-ten Regelvorgangs, $u_k(\cdot)$ bezeichnet die Steuertrajektorie des k-ten Vorgangs, $e_k(\cdot)$ bezeichnet den Regelfehler im k-ten Regelungsvorgang und $u_{k+m}(\cdot)$ bezeichnet die Steuertrajektorie für den (k+m)-ten Regelvorgang.

In der vorteilhaften Weiterführung des Verfahrens sind $\varphi_{u,e}$ Abbildungen, welche einem Wert der Steuertrajektorie bzw. des Regelfehlers einen neuen Wert zuordnen. Als überaus vorteilhaft für die rechnerische Implementierung dieses Vorgangs erweist es sich, daß $\varphi$ eine Funktion sein kann. Im Gegensatz dazu wird bei adaptiven Verfahren bzw. sonstigen Regelungen mit vorgegebenem Sollverlauf oftmals $\varphi$ als ein Funktional, d.h. als eine Abbildung einer Funktion auf eine neue Funktion, verwendet. Ein solcher funktionaler Regelungszusammenhang stellt hohe Anforderungen an das Regelungsverfahren und an dessen Implementierung. Wie bereits angesprochen kann durch m=1 der obige Regelungszusammenhang weiter vereinfacht werden.

Die Auswertung der Funktionswerte $\varphi_{u,e}$ kann durch eine geeignete Schaltung oder durch einen Mikroprozessor erfolgen. Die Verknüpfung der Funktionswerte $\oplus$ kann dabei ebenfalls durch eine geeignet gewählte Schaltung erfolgen.

In einer weiteren Vereinfachung des Verfahrens, die ebenfalls wieder den Rechenaufwand vermindert und die Robustheit der Berechnung erhöht, wird der Wert der neuen Steuertrajektoren ($u_{k+1}$) aus der Summe eines ersten und eines zweiten Wertes bestimmt, wobei der erste Wert nur von dem Wert der Steuertrajektorie ($\varphi_u$) und der zweite Wert nur von dem Wert des Regelfehlers ($\varphi_e$) abhängt. Die Verwendung der Addition, bei mehrkomponentigen Steuertrajektorien die elementweise Addition, führt zu einer einfachen Umsetzung des Reglungszusammenhangs mit einem Addierer. Ferner hat die Addition den Vorteil, daß sich Erfassungsfehler bei der Bestimmung des Regelfehlers e nicht verstärken und das Verfahren somit robust ausgelegt werden kann.

Als vorteilhaft erweist es sich, bei dem erfindungsgemäßen Verfahren, den Wert der neuen Steuertrajektorie aus der Summe des Wertes der alten Steuertrajektorie und dem mit einem reellen Faktor K multiplizierten Regelfehler zu berechnen. Hierbei wird mit anderen Worten also die Funktion $\varphi_u$ als Identitätsabbildung gewählt und die Funktion $\varphi_e$ als Multiplikation mit einem Faktor K gewählt. Werden mehrkomponentige Steuertrajektorien und/oder mehrkomponentige Regelfehler betrachtet, so erfolgt eine elementweise Multiplikation und eine elementweise Addition. Bei einem mehrkomponentigen Regelfehler kann auch ein mehrkomponentiger reeller Faktor K vorgesehen sein, der elementweise mit dem Regelfehler e multipliziert wird.

Es hat sich als zweckmäßig erwiesen, den Wert des Faktors $K \geq 0$ zu wählen. Bei einem mehrkomponentigen Faktor K wird jede Komponente größer Null ($\geq 0$) gewählt. In einer Zusammenfassung der obigen Weiterführungen des erfindungsgemäßen Verfahrens ergibt sich folgender Regelungszusammenhang:

$$\text{Formel 2:} \quad u_{k+1}(t) = u_k(t') + K\, e_k(t'),$$

$$\text{mit } t - T_{k+1} = t' - T_k \text{ und}$$
$$K \geq 0$$

Eine Implementierung eines solchen Regelungszusammenhangs ist überaus einfach, insbesondere da der Verstärkungsfaktor K durch eine einfache Verstärkungsschaltung und die Addition durch einen herkömmlich bekannten Addierer ausgeführt werden kann.

In einer Weiterführung des Verfahrens wird die neue Steuertrajektorie nach Abschluß des Regelungsvorgangs, in dem der Regelfehler bestimmt wurde, berechnet. Hierdurch wird es möglich, ohne Echtzeitanforderung die neue Steuertrajektorie zu berechnen. Indem für den Rechenvorgang zwischen zwei Regelvorgängen ausreichend Rechenzeit zur Verfügung gestellt werden kann, handelt es sich bei dem beschriebenen Verfahren um eine iterativ lernende Regelung, bei der keine Adaption während des Regelvorgangs stattfindet.

In einer zweckmäßigen Weiterbildung kann unter verschiedenen vorbestimmten Sollverläufen ein vorbestimmter Sollverlauf ausgewählt werden. Hierbei ist dann zu berücksichtigen, daß bei der Bestimmung der neuen Steuertrajektorie der jeweils gewählte Sollverlauf mit einbezogen wird. Der Übersicht halber ist die Abhängigkeit von dem gewählten Sollverlauf, welche Eingang in den Regelfehler e findet, in den obigen Formeln nicht wiedergegeben.

Als besonders vorteilhaft erweist es sich Sollverlauf, Steuertrajektorie und Regelfehler als abgetastete Zeitreihen zu speichern und dem Verfahren zur Verfügung zu stellen. Die Abtastrate hängt hierbei von dem zu regelnden Vorgang und der Regelstrecke ab. Selbstverständlich können mit dem erfindungsgemäßen Verfahren auch Zeitverläufe als Funktionen, sei es als explizite Zeitfunktion oder als implizite Zeitfunktion, die beispielsweise als Lösung einer Differentialgleichung gegeben ist, verarbeitet werden.

Als zweckmäßig erweist es sich, die Zeitreihen mit gleichen Zeitabständen abzutasten.

Erfindungsgemäß wird die Aufgabe auch durch eine Regelvorrichtung für Vorgänge mit einem vorbestimmten Sollverlauf gelöst, wobei die Regelvorrichtung aus mindestens einem Speicher und einem Regler besteht, an dem der Sollwertverlauf, eine Steuernajektorie und eine zu der Steuertrajektorie gehörende Ausgangstrajektorie einer Regelstrecke als Eingangssignale anliegen, der eine neue Steuertrajektorie berechnet sowie in dem Speicher ablegt, wobei in dem Speicher zusätzlich noch die Ausgangstrajektorie und die Steuertrajektorie abgelegt sind. In der erfindungsgemäßen Regelvorrichtung bestimmt der Regler einen neuen Sollwertverlauf für den nachfolgenden Steuervorgang.

An dem Regler liegen die Signalwerte des Sollverlaufs, der Steuertrajektorie und der Ausgangstrajektorie an. Die Ausgangstrajektorie wird als der tatsächliche Verlauf der Regelstrecke unter Anlegen des Steuersignals erfaßt. Die so neu berechnete Steuertrajektorie wird in dem Speicher abgelegt, von wo aus sie in einem nachfolgenden Steuervorgang an die Regelstrecke angelegt wird. Ebenfalls sind in dem Speicher die zuletzt an die Regelstrecke angelegte Steuertrajektorie und die von der Regelstrecke erfaßten Ausgangswerte gespeichert.

In einer den Aufbau des Reglers vereinfachenden Ausführung der erfindungsgemäßen Regelvorrichtung liegen an dem Regler die Werte des Sollwertverlaufs, der Ausgangstrajektorie und der Steuertrajektorie aus einem Zeitpunkt des vorangegangenen Steuervorgangs an. Wie oben bereits erläutert wird hierdurch die Berechnung einer neuen Steuertrajektorie auf die einfache Verknüpfung von Werten reduziert. Aufwendige Verknüpfungen, die den Verlauf der Trajektorie berücksichtigt oder die Transformationen der Zeitdarstellung erfordern, werden bei diesem Regler vermieden. Hierdurch reduziert sich die Hardware-Komplexität des Reglers.

Zweckmäßigerweise besteht die Regelvorrichtung aus mindestens drei Speichern. Hierdurch wird ein modularer Aufbau der Speicherbausteine erzielt, so daß die Regelvorrichtung sich sowohl einfach einbauen als auch mit geringeren Materialkosten herstellen läßt. Erfindungsgemäß berechnet der Regler der Regelvorrichtung die Steuemajektorie nach einem der zuvor beschriebenen Verfahren.

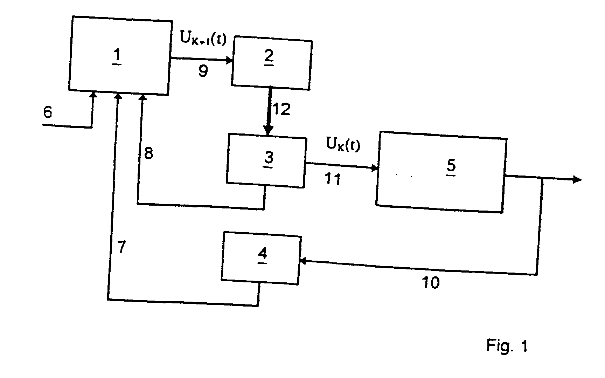

Eine besonders vorteilhafte Ausführungsform der Erfindung wird unter Bezugnahme auf die einzige Figur dargestellt und erläutert.

Die Regelvorrichtung besteht aus einem Regler 1 und drei Speichern 2, 3, 4. Regler 1 und Speicher 2 sind über eine Leitung 9 derart verbunden, daß der Regler 1 eine Steuertrajektorie in dem Speicher 2 ablegen kann. Der Speicher 3 ist über eine Leitung 8 mit dem Regler 1 verbunden, damit Steuerwerte an dem Regler 1 angelegt werden können. Der Speicher 4 ist über eine Leitung 7 mit dem Regler 1 derart verbunden, daß dessen Speicherinhalt an den Regler 1 geliefert wird. Über eine Leitung 11 wird die Steuertrajektorie aus dem Speicher 3 an eine Regelstrecke 5 angelegt. Der tatsächliche Wert der Regelstrecke 5 wird erfaßt und über eine Leitung 10 in den Speicher 4 geschrieben. Von dort wird er über die Leitung 7 dem Regler 1 zugeführt.

Hat der Regler 1 eine neue Steuertrajektorie $u_{k+1}(t)$ berechnet und diese im Speicher 2 abgelegt, so erfolgt anschließend ein Kopieren der Steuertrajektorie aus dem Speicher 2 in den Speicher 3 über eine Leitung 12. Aus dem Speicher 3 wird im nachfolgenden (k+1)-ten Regelungsvorgang die Steuertrajektorie an die Regelstrecke 5 angelegt.

Die Sollwertvorgabe wird extern aus einem weiteren Speicher (nicht dargestellt) über eine Leitung 6 an den Regler 1 geliefert. Bei der Sollwertvorgabe können beispielsweise auch Sensorinformationen, wie beispielsweise Signale von Feuchtigkeitssensoren bei einer Scheibenwischer-Steuerung, berücksichtigt werden.

Die Regelung erfolgt derart, daß während des Regelvorgangs die Istwerte der zu regelnden Größe mit beispielsweise einem Digitalrechner (nicht dargestellt) erfaßt werden. Hierzu werden kontinuierliche Größen abgetastet. Die so abgetastete Zeitreihe wird im Speicher 4 abgelegt. Die auf den Prozeß aufgeschaltete Stellgröße bzw. Steuergröße wird im Speicher 3 abgelegt. Die Sollgröße wird in geschlossener Form oder als abgetastete Zeitreihe an den Regler 1 über die Leitung 6 angelegt, so daß dieser einen Steuertrajektorie bestimmen kann.

Typischerweise läuft der Vorgang auf festen Zeitintervallen 0 bis T. Die Abtastung kann in gleichen oder unterschiedlichen Zeitabständen erfolgen und wird in der Regel von Steuervorgang zu Steuervorgang nicht variiert.

Ist ein Regelvorgang abgeschlossen, so werden die ermittelten Verläufe aus dem Speicher verwendet, um die gesamte Stelltrajektorie bzw. Steuertrajektorie für den nächsten Vorgang gemäß dem Regelgesetz zu berechnen. Hierbei können jeweils einzelne Werte der Trajektorie und des Fehlerverlaufs an den Regler 1 über die Eingänge 6, 7 und 8 anliegen. Diese Trajektorie wird im Speicher 2 abgelegt.

Aus dem Speicher 2 werden die Stellgrößen in den Speicher 3 kopiert. Wird der nächste Vorgang gestartet, so werden die entsprechenden Stellgrößen aus dem Speicher 3 ausgelesen und auf den Prozeß der Regelstrecke 5 aufgeschaltet. Besonders vorteilhaft im Sinne der Meßsignalverarbeitung ist, daß keine Verarbeitung von Signalen während des Vorgangs erfolgt. Mithin können nicht-kausale Operationen, beispielsweise nicht-kausale digitale Filter Verwendung finden. Auch kann beispielsweise eine Glättung der Meßkurven ohne Zeitverzögerung des Regelvorgangs erreicht werden.

Bezugszeichenliste

1    Regler
2    Speicher
3    Speicher
4    Speicher
5    Regelstrecke
6    Sollwert-Eingang
7    Istwert-Eingang
8    Steuersignaleingang
9    Ausgang für neues Steuersignal
10   Leitung
11   Leitung
12   Kopierleitung

**Patentansprüche**

1.   Verfahren zur Regelung einer Regelungsstrecke in einem Kraftfahrzeug mit einem vorbestimmten Sollverlauf (w(t)) und einer Steuertrajektorie ($u_k(t)$), wobei

     a) eine Ausgangstrajektorie der Regelstrecke für die gesamte Regeldauer eines Regelvorgangs, in der die Steuertrajektorie auf die Regelstrecke geschaltet ist, erfaßt wird ($y_l(t)$),

     b) ein Regelfehler der Regelstrecke für den Regelvorgang abhängig von dem Sollverlauf und der Ausgangstrajektorie bestimmt wird (e(t)) und

     c) für jeden Zeitpunkt eines späteren Regelvorgangs eine neue Steuertrajektorie ($u_{k+m}(t)$) abhängig von dem Regelfehler und der Steuertrajektorie ($u_k$) berechnet wird, die die Ausgangstrajektorie dem Sollverlauf annähert.

2.   Verfahren nach Anspruch 1 **dadurch gekennzeichnet, dass** der spätere Regelungsvorgang, für welchen die neue Steuertrajektorie berechnet wird, auf den Regelungsvorgang folgt, in dem der Regelfehler bestimmt wurde.

3.   Verfahren nach Anspruch 2, **dadurch gekennzeichnet, dass** der Wert der neuen Steuertrajektorie in einem Zeitpunkt des nachfolgenden Regelungsvorgangs aus den Werten des Regelfehlers und der Steuertrajektorie zu einem Zeitpunkt des vorangegangenen Regelungsvorgangs bestimmt wird, wobei in den Zeitpunkten der beiden Regelungsvorgänge jeweils die gleiche Zeitdauer seit einem Beginnzeitpunkt, in dem die Steuertrajektorie auf die Regelstrecke geschaltet worden ist, vergangen ist.

4.   Verfahren nach Anspruch 3, **dadurch gekennzeichnet, daß** der Wert der neue Steuertrajektorie aus der Summe eines ersten und eines zweiten Wertes bestimmt wird, wobei der erste Wert von dem Wert der Steuertrajektorie und der zweite Wert von dem Wert des Regelfehlers abhängt.

5.   Verfahren nach Anspruch 4, **dadurch gekennzeichnet, daß** der Wert der neuen Steuertrajektorie aus der Summe des Wertes der alten Steuertrajektorie und dem mit einem reellen Faktor (k) multiplizierten Regelfehler berechnet wird.

6.   Verfahren nach Anspruch 5, **dadurch gekennzeichnet, daß** der Wert des Faktors (k) größer als 0 ist.

7.   Verfahren nach einem der Ansprüche 1 bis 6, **dadurch gekennzeichnet, daß** die neue Steuertrajektorie nach Abschluß des Regelungsvorgangs, in dem der Regelfehler bestimmt worden ist, berechnet wird.

8.   Verfahren nach einem der Ansprüche 1 bis 7, **dadurch gekennzeichnet, daß** der vorbestimmte Sollverlauf unter verschiedenen möglichen Sollverläufen ausgewählt wird.

9.   Verfahren nach einem der Ansprüche 1 bis 8, **dadurch gekennzeichnet, daß** der Sollverlauf, die Steuertrajektorie und der Regelfehler als abgetastete Zeitreihen gespeichert werden.

10.  Verfahren nach Anspruch 9, **dadurch gekennzeichnet, daß** die Zeitreihen mit gleichen Zeitabständen abgetastet werden.

11.  Regelvorrichtung in einem Kraftfahrzeug mit einem vorbestimmten Sollwertverlauf w(t), umfassend mindestens drei Speicher (2, 3, 4) und einen Regler (1), **dadurch gekennzeichnet, dass**

a) der Regler (1) über eine erste Leitung (9) mit dem ersten Speicher (2) derart verbunden ist, dass der Regler (1) eine Steuertrajektorie in dem Speicher (2) ablegen kann,

b) der erste Speicher (2) mit dem zweiten Speicher (3) über eine zweite Leitung (12) derart verbunden ist, dass die Steuertrajektorie aus dem ersten Speicher (2) in den zweiten Speicher (3) kopiert werden kann,

c) der zweite Speicher (3) über eine dritte Leitung (11) mit einer Regelstrecke (5) derart verbunden ist, dass die Steuertrajektorie aus dem zweiten Speicher (3) an der Regelstrecke (5) angelegt werden kann,

d) der zweite Speicher (3) über eine vierte Leitung (8) mit dem Regler (1) derart verbunden ist, dass die Steuertrajektorie an dem Regler (1) angelegt werden kann,

e) ein Ausgang der Regelstrecke (5) über eine fünfte Leitung (10) mit dem dritten Speicher (4) derart verbunden ist, dass eine Ausgangstrajektorie in den dritten Speicher (4) geschrieben werden kann,

f) der dritte Speicher (4) über eine sechste Leitung (7) mit dem Regler (1) derart verbunden ist, dass die Ausgangstrajektorie an den Regler (1) angelegt werden kann,

g) ein Sollverlauf über eine siebte Leitung (6) an dem Regler (1) anliegt und

h) der Regler (1) derart ausgelegt ist, dass er aus der Steuertrajektorie, dem Sollverlauf und der Ausgangstrajektorie eine neue Steuertrajektorie berechnen kann.

## Claims

1. Method for controlling a controlled system in a motor vehicle having a predetermined reference profile (w(t)) and a control trajectory ($u_k$(t)), wherein

   a) an output trajectory of the controlled system is sensed ($y_1$(t)) for the entire control period of a control process in which the control trajectory is connected to the controlled system,

   b) a control error of the controlled system is determined (e(t)) for the control process as a function of the reference profile and the output trajectory, and

   c) a new control trajectory ($u_{k+m}$(t)) is calculated for each time in a later control process as a function of the control error and the control trajectory ($u_k$) which approximates the output trajectory to the reference profile.

2. Method according to Claim 1, **characterized in that** the later control process for which the new control trajectory is calculated follows the control process in which the control error has been determined.

3. Method according to Claim 2, **characterized in that** the value of the new control trajectory is determined at a time during the subsequent control process from the values of the control error and the control trajectory at the time of the preceding control process, wherein at each of the times of the two control processes the same time period has passed since a starting time at which the control trajectory was connected to the controlled system.

4. Method according to Claim 3, **characterized in that** the value of the new control trajectory is determined from the sum of a first and a second value, wherein the first value depends on the value of the control trajectory and the second value on the value of the control error.

5. Method according to Claim 4, **characterized in that** the value of the new control trajectory is calculated from the sum of the value of the old control trajectory and the control error which is multiplied by a real factor (k).

6. Method according to Claim 5, **characterized in that** the value of the factor (k) is greater than 0.

7. Method according to one of Claims 1 to 6, **characterized in that** the new control trajectory is calculated after the termination of the control process in which the control error has been determined.

8. Method according to one of Claims 1 to 7, **characterized in that** the predetermined reference profile is selected from various possible reference profiles.

9. Method according to one of Claims 1 to 8, **characterized in that** the reference profile, the control trajectory and the control error are stored as sampled time sequences.

10. Method according to Claim 9, **characterized in that** the time sequences are sampled with identical time intervals.

11. Control device in a motor vehicle with a predetermined reference value profile w(t), comprising at least three memories (2, 3, 4) and a controller (1), **characterized in that**

a) the controller (1) is connected to the first memory (2) via a first line (9) in such a way that the controller (1) can store a control trajectory in the memory (2),

b) the first memory (2) is connected to the second memory (3) via a second line (12) in such a way that the control trajectory can be copied from the first memory (2) into the second memory (3),

c) the second memory (3) is connected to a controlled system (5) via a third line (11) in such a way that the control trajectory from the second memory (3) can be applied to the controlled system (5),

d) the second memory (3) is connected to the controller (1) via a fourth line (8) in such a way that the control trajectory can be applied to the controller (1),

e) an output of the controlled system (5) is connected to the third memory (4) via a fifth line (10) in such a way that an output trajectory can be written into the third memory (4),

f) the third memory (4) is connected to the controller (1) via a sixth line (7) in such a way that the output trajectory can be applied to the controller (1),

g) a reference profile is applied to the controller (1) via a seventh line (6), and

h) the controller (1) is configured in such a way that it can calculate a new control trajectory from the control trajectory, the reference profile and the output trajectory.

**Revendications**

1. Procédé de réglage d'un système asservi dans un véhicule automobile, comportant un tracé nominal (w(t)) prédéfini et une trajectoire de commande ($u_k$(t)), selon lequel

a) on détecte ($y_l$(t)) une trajectoire de sortie du système asservi pour toute la durée d'une opération de réglage pendant laquelle la trajectoire de commande est connectée au système asservi,

b) en fonction du tracé nominal et de la trajectoire de sortie on détermine (e(t)) une erreur de réglage du système asservi pour l'opération de réglage, et

c) pour chaque instant d'une opération ultérieure de réglage on calcule en fonction de l'erreur de réglage et de la trajectoire de commande ($u_k$) une nouvelle trajectoire de commande ($u_{k+m}$(t)) qui rapproche du tracé nominal la trajectoire de sortie du tracé nominal.

2. Procédé selon la revendication 1,
**caractérisé en ce que**
l'opération ultérieure de réglage pour laquelle la nouvelle trajectoire de commande est calculée suit l'opération de réglage pendant laquelle l'erreur de réglage a été déterminée.

3. Procédé selon la revendication 2,
**caractérisé en ce que**
la valeur de la nouvelle trajectoire de commande est déterminée à un instant de l'opération ultérieure de réglage à partir des valeurs de l'erreur de réglage et de la trajectoire de commande à un instant de l'opération de réglage précédente, avec aux instants des deux opérations de réglage, chaque fois la même durée écoulée depuis un instant initial où la trajectoire de commande a été connectée au système asservi.

4. Procédé selon la revendication 3,
**caractérisé en ce que**
la valeur de la nouvelle trajectoire de commande est déterminée à partir de la somme d'une première et d'une deuxième valeur,
la première valeur dépendant de la valeur prise par la trajectoire de commande et la deuxième valeur dépendant de la valeur prise par l'erreur de réglage.

5. Procédé selon la revendication 4,
**caractérisé en ce que**
la valeur de la nouvelle trajectoire de commande est calculée à partir de la somme de la valeur de l'ancienne trajectoire de commande et à partir de l'erreur de réglage multipliée par un facteur (k) réel.

6. Procédé selon la revendication 5,
**caractérisé en ce que**
la valeur du facteur (k) est supérieure à O.

7. Procédé selon l'une des revendications 1 à 6,
**caractérisé en ce que**
la nouvelle trajectoire de commande est calculée après que s'est terminée l'opération de réglage pendant laquelle a été calculée l'erreur de réglage.

8. Procédé selon l'une des revendications 1 à 7,
**caractérisé en ce que**
le tracé nominal prédéfini est choisi parmi différents tracés nominaux possibles.

**9.** Procédé selon l'une des revendications 1 à 8, **caractérisé en ce que** le tracé nominal, la trajectoire de commande et l'erreur de réglage sont mémorisés sous forme de séries chronologiques balayées.

**10.** Procédé selon la revendication 9, **caractérisé en ce que** les séries chronologiques sont balayées à des intervalles de temps égaux.

**11.** Dispositif de réglage dans un véhicule automobile comportant un tracé prédéfini de valeur nominale w (t) et muni d'au moins trois mémoires (2, 3, 4) et d'un régulateur (1), **caractérisé en ce que**

a) le régulateur (1) est relié à la première mémoire (2) par l'intermédiaire d'une première liaison (9) de telle manière que le régulateur (1) peut enregistrer dans la mémoire (2) une trajectoire de commande,

b) la première mémoire (2) est reliée à la deuxième mémoire (3) par l'intermédiaire d'une deuxième liaison (12) de telle manière que la trajectoire de commande peut être copiée de la première mémoire (2) dans la deuxième mémoire (3),

c) la deuxième mémoire (3) est reliée à un système asservi (5) par l'intermédiaire d'une troisième liaison (11) de telle manière que la trajectoire de commande peut être appliquée au système asservi (5) à partir de la deuxième mémoire (3),

d) la deuxième mémoire (3) est reliée au régulateur (1) par l'intermédiaire d'une quatrième liaison (8) de telle manière que la trajectoire de commande peut être appliquée au régulateur (1),

e) une sortie du système réglé (5) est reliée à la troisième mémoire (4) par l'intermédiaire d'une cinquième liaison (10) de telle manière qu'une trajectoire de sortie peut être écrite dans la troisième mémoire (4),

f) la troisième mémoire (4) est reliée au régulateur (1) par l'intermédiaire d'une sixième liaison (7) de telle manière que la trajectoire de sortie peut être appliquée au régulateur (1),

g) un tracé nominal s'applique au régulateur (1) par l'intermédiaire d'une septième liaison (6) et

h) le régulateur (1) est conçu de telle manière qu'il peut calculer une nouvelle trajectoire de commande à partir de la trajectoire de commande, du tracé nominal et de la trajectoire de sortie.

Fig. 1